# EUROPEAN PATENT APPLICATION

(11) **EP 4 807 479 A2**
(43) Date of publication of application: **16.09.2026**
(21) Application number: 26183724.9
(22) Date of filing: 06.08.2020
(51) Int. Cl.: G05D 1/00

(54) **AUTOMATIC TRAVEL SYSTEM FOR WORK VEHICLE**

(30) Priority: 08.08.2019 JP 2019146425
(62) Document number(s) of the earlier application(s) in accordance with Art. 76 EPC: 20850004.1 / 4 011 185
(71) Applicant: Yanmar Power Technology Co., Ltd., Osaka-shi Osaka 530-0013 (JP)
(72) Inventor: SHIRAFUJI, Taiki, Osaka-shi (JP); IWASE, Takuya, Osaka-shi (JP)
(74) Representative: Sekiguchi, Kazuya

(57) **Abstract**

An automatic travel system for a work vehicle wherein: when, at the time that a work vehicle (1) reaches an entry area (Aa) for a parallel path (P1), a condition-assessing unit determines that a starting condition for a first automatic travel control has been met, an automatic travel control unit executes the first automatic travel control for causing the work vehicle (1) to travel automatically along the parallel path (P1) in a working state; and when the condition-assessing unit determines that the starting condition for the first automatic travel control has not been met, the automatic travel control unit executes an automatic position adjustment travel control for causing the work vehicle (1) to make a position adjustment by a composite operation of forward/backward switching operations and steering operations of the work vehicle (1) so that the starting condition for the first automatic travel control is met.

## Description

### TECHNICAL FIELD

The present invention relates to an automatic travel system for a work vehicle that enables a work vehicle such as a tractor or combine to perform automatic travel.

### BACKGROUND ART

As such an automatic travel system for a work vehicle as described above, there is one that includes a control part for causing a work vehicle to perform automatic travel according to a work path generated according to a work area, a position detection part for detecting the position of the work vehicle, and an azimuth detection part for detecting the azimuth of the work vehicle. Further, there is one in which, in a case where an instruction for starting the work is provided when the work vehicle is located at the travel starting position on a headland that is set at the periphery of the work area, the control part is configured to cause the work vehicle to perform the automatic travel from the travel starting position on the headland to the work starting position of the work path while controlling the traveling of the work vehicle so as to make the deviation between the extension line of the work path and the position of the work vehicle small (for example, see Patent Literature 1).

### CITATION LIST

### Patent Literature

Patent Literature 1: Japanese Unexamined Patent Application Publication No. 2017-162373

### DISCLOSURE OF INVENTION

### PROBLEMS TO BE SOLVED BY THE INVENTION

In the technology described in Patent Literature 1, the control part controls the traveling of the work vehicle so that the deviation between the extension line of the work path and the position of the work vehicle becomes small during the time when the work vehicle performs the automatic travel from the travel starting position on the headland toward the work starting position of the work path. Therefore, as the distance from the travel starting position of the headland to the work starting position of the work path becomes longer, the deviation between the extension line and the position of the work vehicle can become smaller. Accordingly, it is possible to make the work vehicle perform the automatic travel with high precision according to the work path in the work area, so that the work precision of the work vehicle can be improved.

On the other hand, since the headland becomes wider and the work area becomes narrower in order to make the distance from the travel starting position of the headland to the work starting position of the work path longer, for example, in a case where the work area is a cropping area, the planting acreage becomes narrower and the crop harvest amount is reduced. Further, in a case where the work area is a reciprocating work area in which the work vehicle is made to travel in a reciprocating manner and the headland is an orbiting work area in which the work vehicle is made to travel in an orbiting manner, the work efficiency is reduced due to an increase in the number of times the work vehicle orbits the headland. Specifically, the burden on the user increases in a case where the orbiting travel of the work vehicle is performed by manual driving.

If the headland is narrowed to avoid such reduction in the harvest amount and deterioration in the work efficiency, the distance from the travel starting position in the headland to the work starting position of the work path becomes shorter as the headland becomes narrower, and thus the deviation between the extension line of the work path and the position of the work vehicle at the point in time where the work vehicle reaches the work starting position of the work path becomes larger. In such a state, if the control part switches the work vehicle to the working state and make the work vehicle perform the automatic travel according to the work path, the work vehicle will start the automatic travel in an unstable state in which the work vehicle wobbles more greatly to the left and right relative to the work path as the deviation is greater, so that the travel distance required for the wobbling to be settled becomes longer. Therefore, as for the work trajectory after the work vehicle passes, an uneven state in which the fluctuation to the left and right relative to the work path is larger at positions closer to the work starting position lasts for a long distance.

In view of this situation, the main object of the present invention is to improve the work precision of the work vehicle in automatic travel without causing a reduction in the harvest amount and a deterioration in the work efficiency.

### MEANS FOR SOLVING THE PROBLEMS

The first characteristic configuration of the present invention is an aspect that an automatic travel system for a work vehicle includes: an entry area setting part that sets an entry area of the work vehicle for a plurality of parallel paths that are arranged with a predetermined interval; a measuring part that measures a position and an orientation of the work vehicle; an automatic travel control part that executes a first automatic travel control for causing the work vehicle to perform automatic travel according to the parallel paths in a working state, based on the parallel paths and positioning information from the positioning part; a deviation detection part that detects an angular deviation and a lateral deviation of the work vehicle relative to the parallel paths at a point in time where the work vehicle reaches the entry area, based on the parallel paths and the positioning information from the measuring part; and a condition detection part that determines whether or not a starting condition of the first automatic travel control is satisfied, based on detection information from the deviation detection part, in a case where the work vehicle reaches the entry area, wherein the condition detection part determines that the starting condition of the first automatic travel control is satisfied in a case where the angular deviation is less than a predetermined angle and the lateral deviation is less than a predetermined value, and, at the point in time where the work vehicle reaches the entry area, the automatic travel control part executes the first automatic travel control in a case where the condition determination part determines that the starting condition of the first automatic travel control is satisfied and executes automatic position adjustment travel control for causing the work vehicle to perform position adjustment travel by an operation combining a forward-reverse traveling switching operation and a steering operation of the work vehicle so as to satisfy the starting condition of the first automatic travel control in a case where the condition determination part determines that the starting condition of the first automatic travel control is not satisfied.

According to the present configuration, the work precision of the work vehicle in automatic travel can be improved without causing a decrease in the harvest amount or a deterioration in the work efficiency.

### BRIEF DESCRIPTION OF DRAWINGS

FIG. 1 is a diagram illustrating a schematic configuration of an automatic travel system for a work vehicle.
FIG. 2 is a block diagram illustrating a schematic configuration of the automatic travel system for a work vehicle.
FIG. 3 is a schematic diagram illustrating a power transmission configuration of a tractor.
FIG. 4 is a plan view illustrating an example of a target path for automatic travel.
FIG. 5 is a block diagram illustrating a schematic configuration of an obstacle detection unit.
FIG. 6 is an explanatory diagram illustrating a state in which the tractor is located in an entry area of a parallel path in a state in which a starting condition of the first automatic travel control is satisfied.
FIG. 7 is an explanatory diagram illustrating a state in which the tractor performs position adjustment travel in a travelable area where an entry area and a travel-direction upstream area are selected.
FIG. 8 is an explanatory diagram illustrating a forward-traveling state in which the tractor performs position adjustment travel in a travelable area where an entry area and a travel-direction downstream area are selected.
FIG. 9 is an explanatory diagram illustrating a reverse-traveling state in which the tractor performs position adjustment travel in a travelable area where an entry area and a travel-direction downstream area are selected.
FIG. 10 is a flowchart of travel control switching processing.

### DESCRIPTION OF EMBODIMENTS

Hereinafter, as an example of a mode for carrying out the present invention, an explanation will be given of the embodiment in which the automatic travel system for a work vehicle according to the present invention is applied to a tractor, which is an example of the work vehicle, based on the drawings. Note that, other than a tractor, the automatic travel system for a work vehicle according to the present invention can be applied to a manned work vehicle such as a manned mower, a manned rice transplanter, a combine, a carrier, a snowplow, and a wheel loader, and to an unmanned work vehicle such as an unmanned mower, for example.

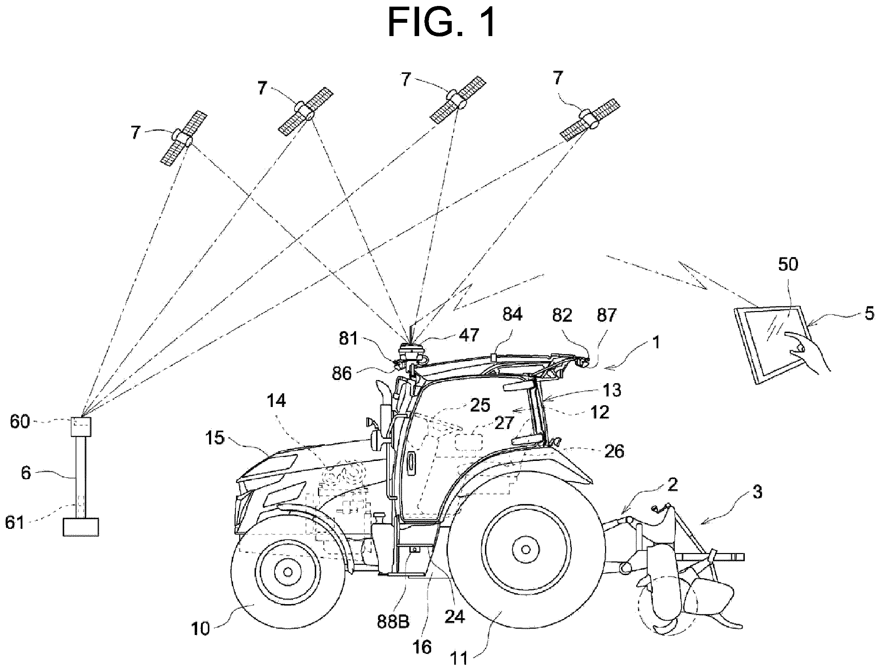

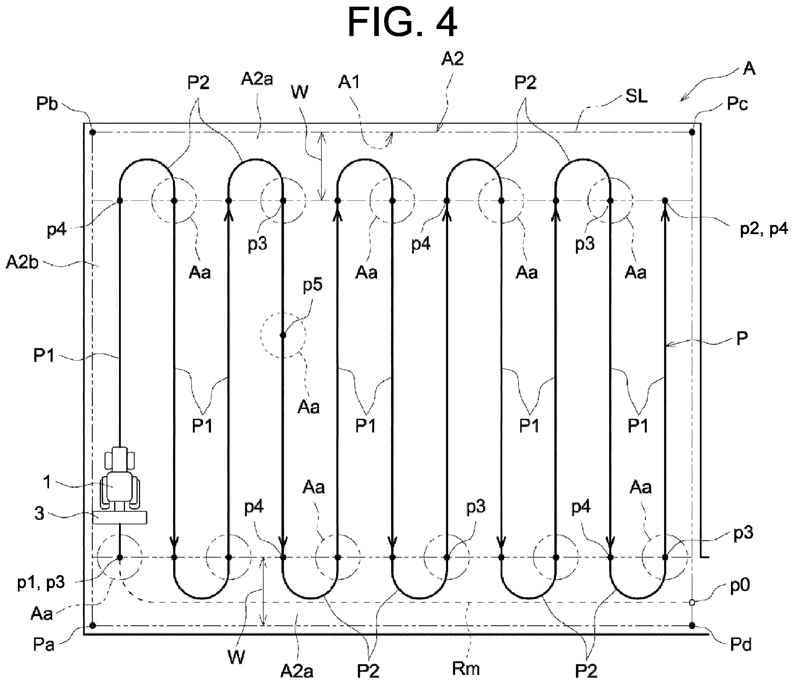

As illustrated in FIG. 1, the rotary tiller 3, which is an example of a work device, is coupled via the three-point link mechanism 2 to the rear part of the tractor 1, which is exemplified in the present embodiment, in a liftable and rollable manner. Accordingly, this tractor 1 functions as a work vehicle having a rotary tillage specification. The tractor 1 can perform automatic travel in the field A, which is illustrated in FIG. 4 as an example of a work site, or the like by using an automatic travel system for a work vehicle.

Note that, instead of the rotary tiller 3, a rear-mounted-type work device, such as a plow, disc harrow, a cultivator, a subsoiler, a seeder, a spraying device, an offset mower, or a harvesting device, can be coupled to the rear part of the tractor 1. In addition, a front-mounted-type work device, such as a front loader or a front mower conditioner can be coupled to the front part of the tractor 1.

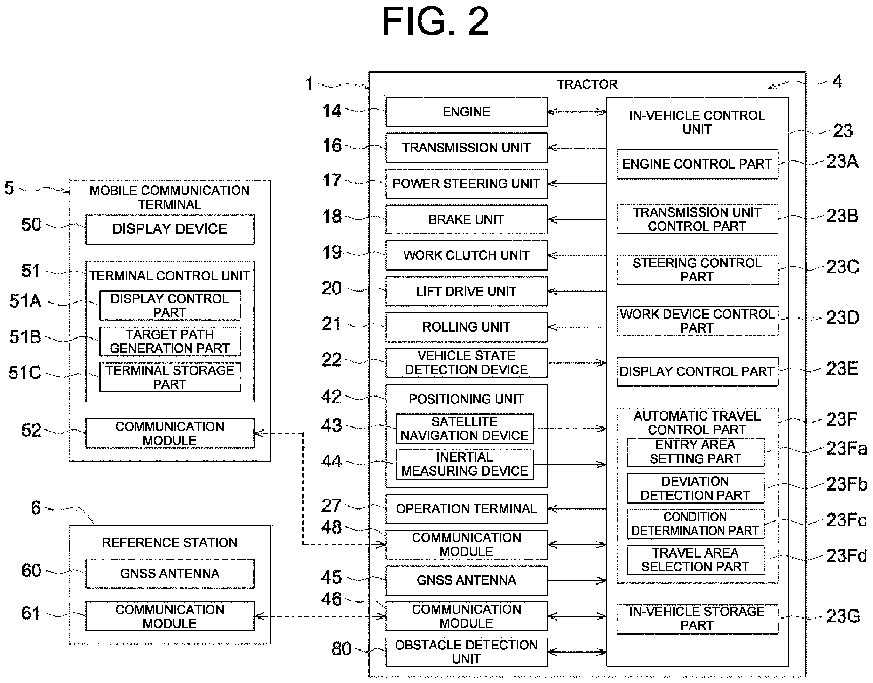

As illustrated in FIG. 1 and FIG. 2, the automatic travel system includes the automatic travel unit 4 that is mounted on the tractor 1, the mobile communication terminal 5 which is an example of a wireless communication device that is set to communicate with the automatic travel unit 4 in a wirelessly communicable manner, etc. The mobile communication terminal 5 includes the multi-touch-type display device (for example, a liquid crystal panel) 50, which enables displaying of various kinds of information related to automatic travel, input operations, etc.

Note that a tablet-type personal computer, a smartphone, or the like can be adopted as the mobile communication terminal 5. Further, for the wireless communication, a wireless LAN (Local Area Network) such as Wi-Fi^{®}, a short-range wireless communication such as Bluetooth^{®}, etc., can be adopted.

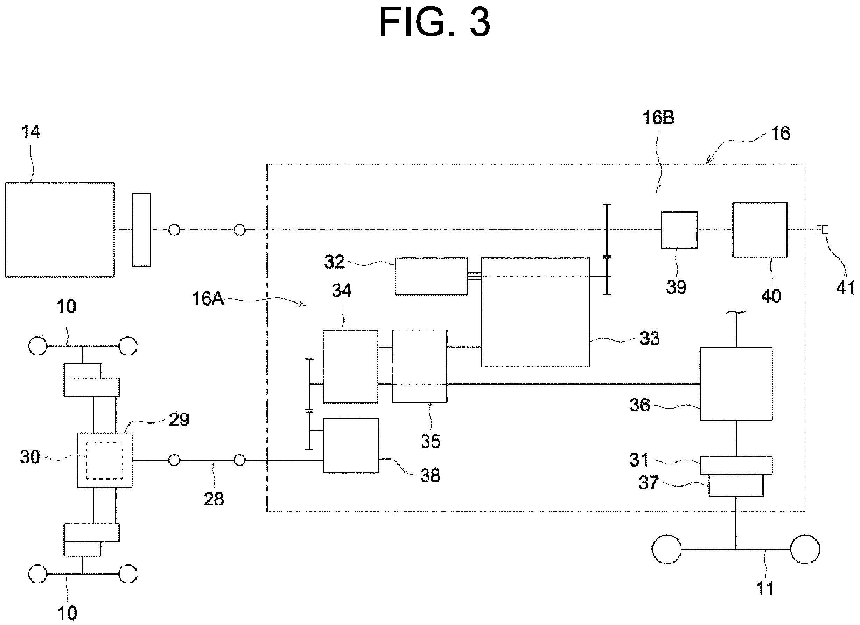

As illustrated in FIG. 1 and FIG. 3, the tractor 1 includes the drivable and steerable left and right front wheels 10, the drivable left and right rear wheels 11, the cabin 13 forming the boarding-type driving part 12, the electronically-controlled -type diesel engine (hereinafter referred to as the engine) 14 having a common rail system, the bonnet 15 covering the engine 14, etc., the transmission unit 16 for shifting power from the engine 14, etc. Accordingly, this tractor 1 is configured to have a front-wheel steering specification capable of driving four wheels. Note that an electronically-controlled-type gasoline engine having an electronic governor or the like may be adopted as the engine 14.

As illustrated in FIG. 2, the tractor 1 includes the full-hydraulic-type power steering unit 17 that steers the left and right front wheels 10, the brake unit 18 that brakes the left and right rear wheels 11, the electro-hydraulically-controlled-type work clutch unit 19 that connects and cuts off power transmission to a driving-type work device such as the rotary tiller 3, the electro-hydraulically-controlled-type lift drive unit 20 that drives the rotary tiller 3 up and down, the electro-hydraulically-controlled-type rolling unit 21 that drives the rotary tiller 3 in a roll direction, the vehicle state detection device 22 including various kinds of sensors, switches, and the like that detect various kinds of setting states, operation states of each part, and the like of the tractor 1, the in-vehicle control unit 23 having various kinds of control parts, etc. Note that the power steering unit 17 may be of an electric type having an electric motor for steering.

As illustrated in FIG. 1 and FIG. 2, the driving part 12 is equipped with the steering wheel 25 for manual steering, the seat 26 for an occupant, and the operation terminal 27 that enables displaying of various kinds of information, input operations, etc. Although not illustrated in the drawings, the driving part 12 is equipped with operation levers, such as an acceleration lever and a main shift lever, operation pedals, such as an acceleration pedal and a clutch pedal, etc. A multi-touch-type liquid crystal monitor, a virtual terminal compatible with ISOBUS, etc., can be adopted for the operation terminal 27.

As illustrated in FIG. 3, the transmission unit 16 is equipped with the travel power transmission system 16A, which shifts the power from the engine 14 for traveling, and the work power transmission system 16B, which shifts the power from the engine 14 for working. Further, the power after the shift by the travel power transmission system 16A is transmitted to the left and right front wheels 10 via the power transmission axis 28 for driving the front wheels, the differential device 30 for the front wheels which is built in the front axle case 29, etc. Further, the power after the shift by the work power transmission system 16B is transmitted to the rotary tiller 3. The transmission unit 16 is equipped with the left and right brakes 31 that separately brake the left and right rear wheels 11.

The travel power transmission system 16A includes the electronically-controlled -type main transmission device 32 that shifts the power from the engine 14, the electro-hydraulically-controlled-type forward-reverse traveling switching device 33 that switches the power from the main transmission device 32 for forward traveling and reverse traveling, the gear-type sub transmission device 34 that shifts the power for forward traveling and reverse traveling from the forward-reverse traveling switching device 33 between two levels, i.e., high and low, the gear-type creep transmission device 35 that shifts the power for forward traveling and reverse traveling from the forward-reverse traveling switching device 33 into a very low speed level, the differential device 36 for the rear wheels that distributes the power from the sub transmission device 34 or the creep transmission device 35 to the left and right rear wheels 11, the left and right deceleration devices 37 that decelerate the power from the differential device 36 for the rear wheels and transmits the power to the left and right rear wheels 11, the electro-hydraulically-controlled-type power transmission switching device 38 that switches the power transmission from the sub transmission device 34 or the creep transmission device 35 to the left and right front wheels 10, etc.

The work power transmission system 16B includes the hydraulic-type work clutch 39 that connects and cuts off the power from the engine 14, the work transmission device 40 that switches the power transmitted via the work clutch 39 among three forward rotation and one reverse rotation, the PTO shaft 41 that outputs the power from the work transmission device 40 for working, etc. In a case where a driving-type work device such as the rotary tiller 3 is coupled to the rear part of the tractor 1, the power taken from the PTO shaft 41 is transmitted to the work device via an external power transmission axis (not illustrated in the drawings) or the like.

An I-HMT (Integrated Hydro-static Mechanical Transmission), which is an example of a hydraulic mechanical continuously variable transmission that has higher transmission efficiency than that of a hydro-static continuously variable transmission (HST: Hydro-Static Transmission), is adopted for the main transmission device 32.

Note that, instead of an I-HMT, it is also possible that an HMT (Hydraulic Mechanical Transmission) which is an example of a hydraulic mechanical continuously variable transmission, a hydro-static continuously variable transmission, a belt-type continuously variable transmission, or the like is adopted for the main transmission device 32. Further, instead of a continuously variable transmission, it is also possible to adopt an electro-hydraulically-controlled-type stepped transmission having multiple hydraulic transmission clutches and multiple electromagnetic-type transmission valves that control oil flows corresponding to the multiple hydraulic transmission clutches.

The power transmission switching device 38 switches the states of power transmission to the left and right front wheels 10 among the power transmission cut-off state in which the power transmission to the left and right front wheels 10 is cut off, the even speed power transmission state in which the power is transmitted to the left and right front wheels 10 so that the peripheral speed of the left and right front wheels 10 becomes the same as the peripheral speed of the left and right rear wheels 11, and the double speed power transmission state in which the power is transmitted to the left and right front wheels 10 so that the peripheral speed of the left and right front wheels 10 becomes approximately twice as high as the peripheral speed of the left and right rear wheels 11. Accordingly, this tractor 1 is configured to be capable of switching among the two-wheel drive state, the four-wheel drive state, and the front-wheel double speed state.

Although not illustrated in the drawings, the brake unit 18 includes the left and right brakes 31, a foot brake system that operates the left and right brakes 31 in conjunction with stepping operations on the left and right brake pedals that are installed in the driving part 12, a parking brake system that operates the left and right brakes 31 in conjunction with operations on the parking lever installed in the driving part 12, a turning brake system that operates the brake 31 on the inner side of a turn in conjunction with a steering of the left and right front wheels 10 at a set angle or more, etc.

The vehicle state detection device 22 is a general term for various kinds of sensors, switches, etc., that are installed in the respective parts of the tractor 1. Although not illustrated in the drawings, the vehicle state detection device 22 includes an acceleration sensor that detects the operating position of the acceleration lever, a transmission sensor that detects the operating position of the main transmission lever, a reverser sensor that detects the operating position of the reverser lever for switching forward and reverse traveling, a rotation sensor that detects the output rotational speed of the engine 14, a vehicle speed sensor that detects the vehicle speed of the tractor 1, a steering angle sensor that detects the steering angle of the front wheels 10, etc.

As illustrated in FIG. 2, the in-vehicle control unit 23 includes the engine control part 23A that performs control related to the engine 14, the transmission unit control part 23B that performs control related to the transmission unit 16 such as switching of vehicle speed and forward and reverse traveling of the tractor 1, the steering control part 23C that performs control related to steering, the work device control part 23D that performs control related to the work device such as the rotary tiller 3, the display control part 23E that performs control related to displaying and notification of the operation terminal 27, the automatic travel control part 23F that performs control related to automatic travel, the non-volatile in-vehicle storage part 23G that stores the target path P (see FIG. 4) for automatic travel, which is generated according to the travel areas divided in a field, etc. Each of the control parts 23A to 23F is constructed with an electronic control unit in which a microcontroller, etc., are integrated, various kinds of control programs, etc. Each of the control parts 23A to 23F is connected in a mutually communicable manner via a CAN (Controller Area Network).

Note that, for example, a communication standard other than a CAN or in-vehicle Ethernet, CAN-FD (CAN with Flexible Data rate), or the like, which is a next-generation communication standard, may also be adopted for the mutual communication among the respective control parts 23A to 23F.

The engine control part 23A executes the engine rotational speed maintaining control for maintaining the engine rotational speed to the rotational speed according to the operating position of the acceleration lever, based on the detection information from the acceleration sensor and the detection information from the rotation sensor, etc.

The transmission unit control part 23B executes the vehicle speed control for controlling the operation of the main transmission device 32 so that the vehicle speed of the tractor 1 is changed to the speed according to the operating position of the main transmission lever, based on the detection information from the transmission sensor and the detection information from the vehicle speed sensor, the forward-reverse traveling switching control for switching the power transmission states of the forward-reverse traveling switching device, based on the detection information from the reverser sensor, etc. The vehicle speed control includes a deceleration-and-stop processing for controlling the main transmission device 32 to decelerate into the zero-speed state so as to make the tractor 1 stop traveling in a case where the transmission lever is operated to the zero-speed position.

The work device control part 23D executes the work clutch control for controlling the operation of the work clutch unit 19, based on an operation on the PTO switch installed in the driving part 12 or the like, the lift control for controlling the operation of the lift drive unit 20, based on an operation on the lift switch installed in the driving part 12 and the setting value of a height setting dial or the like, the rolling control for controlling the operation of the rolling unit 21, based on the setting value of a roll angle setting dial installed in the driving part 12 or the like, etc. The PTO switch, the lift switch, the height setting dial, and the roll angle setting dial are included in the vehicle state detection device 22.

As illustrated in FIG. 2, the tractor 1 is equipped with the positioning unit (an example of the positioning part) 42 that measures the position, orientation, etc., of the tractor 1. The positioning unit 42 includes the satellite navigation device 43 that measures the position and orientation of the tractor 1 by utilizing a GNSS (Global Navigation Satellite System) which is an example of the satellite positioning system, the inertial measurement device (IMU: Inertial measurement unit) 44 that has a three-axis gyroscope, a three-direction acceleration sensor, etc., to measure the posture, orientation, etc., of tractor 1, etc. As the positioning methods utilizing a GNSS, there are DGNSS (Differential GNSS), RTK-GNSS (Real Time Kinematic GNSS), etc. In the present embodiment, the RTK-GNSS, which is appropriate for positioning of a moving body, is adopted. Therefore, as illustrated in FIG. 1, the reference station 6 that enables positioning by the RTK-GNSS is installed at a known location in the periphery of the field.

As illustrated in FIG. 1 and FIG. 2, the tractor 1 and the reference station 6 each include the GNSS antenna 45 or 60 which receives a radio wave sent from the positioning satellites 7 (see FIG. 1), the communication module 46 or 61 that enables wireless communication of respective information including positioning information between the tractor 1 and the reference station 6, etc. Accordingly, the satellite navigation device 43 of the positioning unit 42 can measure the position and orientation of the tractor 1 with high precision, based on the positioning information that is obtained when the GNSS antenna 45 on the tractor side receives a radio wave from the positioning satellites 7 and the positioning information that is obtained when the GNSS antenna 60 on the reference station side receives a radio wave from the positioning satellites 7. Further, the positioning unit 42 includes the satellite navigation device 43 and the inertial measurement device 44, so as to thereby measure the position, orientation, and posture angles (yaw angle, roll angle, pitch angle) of the tractor 1 with high degree of accuracy.

In this tractor 1, the inertial measurement device 44 of the positioning unit 42, the GNSS antenna 45, and the communication module 46 are included in the antenna unit 47 illustrated in FIG. 1. The antenna unit 47 is arranged at the left-right central position on the front-side upper part of the cabin 13.

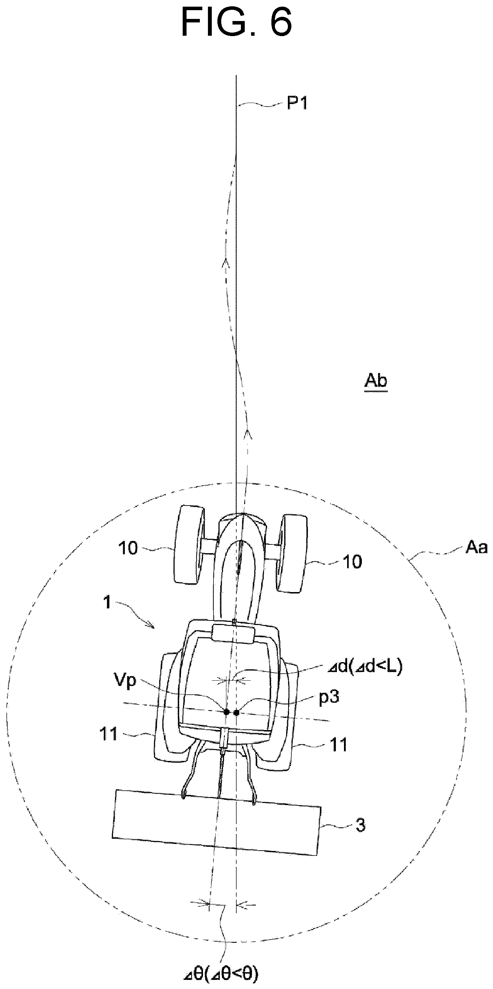

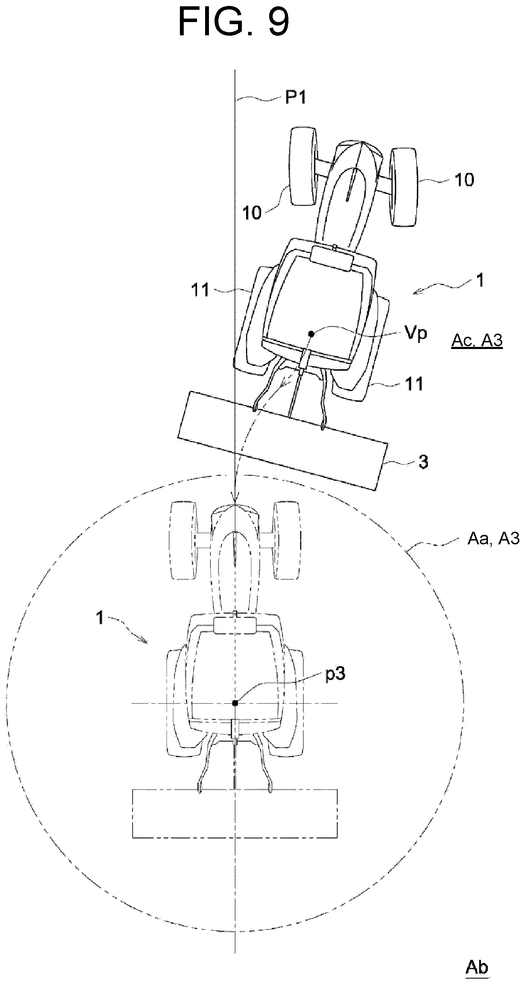

As illustrated in FIG. 6 to FIG. 9, the vehicle body position Vp when the position of the tractor 1 is specified is set to the central position of the rear wheel axle. The vehicle body position Vp can be found based on the positioning information from the positioning unit 42 and the vehicle body information including the positional relationship between the mounting position of the GNSS antenna 45 and the center position of the rear wheel axle in the tractor 1.

As illustrated in FIG. 2, the mobile communication terminal 5 is equipped with the terminal control unit 51, which has an electronic control unit in which a microcontroller, etc., are integrated, various kinds of control programs, etc. The terminal control unit 51 includes the display control part 51A that performs control related to displaying and notification of the display device 50, etc., the target path generation part 51B that generates the target path P for automatic travel, the non-volatile terminal storage part 51C that stores the target path P or the like generated by the target path generation part 51B, etc. As various kinds of information to be used for generating the target path P, the terminal storage part 51C stores vehicle body information such as a turning radius of the tractor 1 and a work width of the rotary tiller 3, field information that is obtained from the above-described positioning information, etc. For specifying the shape, size, etc., of the field A, the field information includes the four corner points Pa to Pd (see FIG. 4) which are multiple shape specification positions (shape specification coordinates) in the field A and are obtained by utilizing the GNSS at the time of making the tractor 1 travel along the outer peripheral edge of the field A, the shape specification line SL (see FIG. 4) in a rectangular shape that connects those corner points Pa to Pd to specify the shape, size, etc., of the field A, etc.

As illustrated in FIG. 2, the tractor 1 and the mobile communication terminal 5 are equipped with the communication modules 48 and 52 that enable wireless communication of respective information including positioning information between the in-vehicle control unit 23 and the terminal control unit 51, etc. In a case where Wi-Fi is adopted for the wireless communication with the mobile communication terminal 5, the communication module 48 of the tractor 1 functions as a converter that converts communication information bidirectionally for CAN and Wi-Fi. The terminal control unit 51 can obtain various kinds of information related to the tractor 1 including the position, orientation, etc., of the tractor 1 via wireless communication with the in-vehicle control unit 23. Accordingly, it is possible to display various kinds of information including the position, orientation, etc., of the tractor 1 relative to the target path P on the display device 50 of the mobile communication terminal 5.

The target path generation part 51B generates the target path P, based on the turning radius of the tractor 1 and the work width of the rotary tiller 3, which are included in the vehicle body information, and the shape and size of the field A, which are included in the field information, etc.

For example, as illustrated in FIG. 4, in the rectangular field A, in the case where the start position p1 and the end position p2 of the automatic travel are set and the work travel direction of the tractor 1 is set to the direction along the short side of the field A, the target path generation part 51B first divides the field A into the margin area A1 that is adjacent to the outer peripheral edge of the field A and the travel area A2 that is positioned on the inside of the margin area A1, based on the above-described four corner points Pa to Pd and the rectangular shape specification line SL.

Next, the target path generation part 51B divides the travel area A2 into the pair of headland areas A2a, which are set on the ridge edges on the respective long sides of the travel area A2, and the central area A2b, which is set between the pair of headland areas A2a, based on the turning radius of the tractor 1, the work width of the rotary tiller 3, etc. Thereafter, in the central area A2b, the target path generation part 51B generates the multiple parallel paths P1, which are arranged in parallel with a predetermined interval according to the work width in the direction along the long sides of the field A. Further, in each of the headland areas A2a, the target path generation part 51B generates multiple connection paths P2, which connect the multiple parallel paths P1 in the travel order of the tractor 1.

Accordingly, it is possible for the target path generation part 51B to generate the target path P in which the tractor 1 can be made to perform automatic travel from the start position p1 to the end position p2 of the automatic travel, which are set in the field A illustrated in FIG. 4.

In the field A illustrated in FIG. 4, the margin area A1 is an area that is secured between the outer peripheral edge of the field A and the travel area A2 in order to prevent the rotary tiller 3 or the like from coming into contact with another object, such as a ridge adjacent to the field A, when the tractor 1 automatically travels at a ridge edge of the travel area A2. Each of the headland areas A2a is a turn area for the tractor 1 to make a turning movement from the currently-traveling parallel path P1 toward the next parallel path P1 according to the connection path P2. The central area A2b is the work area in which the tractor 1 performs automatic travel in the working state according to the respective parallel paths P1.

In the target path P illustrated in FIG. 4, each of the parallel paths P1 is a work path on which the tractor 1 automatically travels while performing the tillage work with the rotary tiller 3. Each of the connection paths P2 is a non-work path on which the tractor 1 automatically travels without performing the tillage work with the rotary tiller 3. The starting end position p3 of each parallel path P1 is the work starting position at which the tractor 1 starts the tillage work with the rotary tiller 3. The trailing end position p4 of each parallel path P1 is the work stopping position at which the tractor 1 stops the tillage work with the rotary tiller 3. Among the starting end positions p3 of the respective parallel paths P1, the starting end position p3 of the parallel path P1 that is set as the first parallel path in the travel order of the tractor 1 is the start position p1 of the automatic travel. Further, the starting end positions p3 of the remaining parallel paths P1 are the connection positions with the trailing end positions of the connection paths P2. Further, the trailing end position p4 of the parallel path P1 that is set as the last parallel path in the travel order of the tractor 1 is the end position p2 of the automatic travel.

Note that the target path P illustrated in FIG. 4 is merely an example, and, based on the vehicle body information which differs depending on the model of the tractor 1, the type of the work device, etc., and the field information such as the shape, size, etc., of the field A which differs depending on the field A, etc., the target path generation part 51B can generate various target paths P appropriate for those information.

Note that, on the target path P illustrated in FIG. 4, in a case where the tractor 1 performs a soil puddling work with a soil puddling device, each parallel path P1 and each connection path P2 are used as the work paths.

The target path P is stored in the terminal storage part 51C in a state of being associated with the vehicle body information, field information, etc., so as to be displayed on the display device 50 of the mobile communication terminal 5. In addition to the above-described work starting position p3 and the work stopping position p4, the target path P includes the azimuth angle of each parallel path P1, the target vehicle speed of the tractor 1 on each parallel path P1, the target vehicle speed of the tractor 1 in each connection path P2b, the front wheel steering angle on each parallel path P1, the front wheel steering angle on each connection path P2b, etc.

The terminal control unit 51 sends the field information, the target path P, etc., which are stored in the terminal storage part 51C, to the in-vehicle control unit 23 in response to a send-request command from the in-vehicle control unit 23. The in-vehicle control unit 23 stores the received field information, target path P, etc., in the in-vehicle storage part 23G. Regarding the sending of the target path P, for example, it is also possible that the terminal control unit 51 sends all target paths P from the terminal storage part 51C to the in-vehicle control unit 23 at once at a stage before the tractor 1 starts the automatic travel. Further, it is also possible that the terminal control unit 51 divides the target path P into multiple divided path information for each predetermined distance in order to sequentially send a predetermined number of divided path information according to the travel order of the tractor 1 from the terminal storage part 51C to the in-vehicle control unit 23 each time the travel distance of the tractor 1 reaches a predetermined distance from the stage before the tractor 1 starts the automatic travel.

In the in-vehicle control unit 23, the detection information from various kinds of sensors, switches, etc., included in the vehicle state detection device 22 is input to the automatic travel control part 23F via the transmission unit control part 23B, the steering control part 23C, etc. Accordingly, the automatic travel control part 23F can monitor the various kinds of setting states, the operation states of each part, etc., of the tractor 1.

In a state where a user such as the occupant or an administrator manually drives the tractor 1 to move the tractor 1 to the start position p1 of the automatic travel and then performs a manual operation to satisfy various kinds of automatic travel starting conditions to switch the travel mode of the tractor 1 to the automatic travel mode, in a case where the display device 50 of the mobile communication terminal 5 is operated to provide a command of starting the automatic travel, the automatic travel control part 23F starts the automatic travel control for causing the tractor 1 to automatically travel according to the target path P while obtaining the position, orientation, etc., of the tractor 1 with the positioning unit 42.

During the automatic travel control, for example, in a case where the user operates the display device 50 of the mobile communication terminal 5 to provide a command of terminating the automatic travel or in a case where the user aboard the driving part 12 operates a manual operation tool such as the steering wheel 25 or an acceleration pedal, the automatic travel control part 23F terminates the automatic travel control and switches the travel mode from the automatic travel mode to the manual travel mode. In the case of restarting the automatic travel control after terminating the automatic travel control as described above, first, the user gets aboard the driving part 12 and switches the travel mode of the tractor 1 from the automatic travel mode to the manual travel mode. Next, after performing the manual operation to satisfy the various kinds of automatic travel starting conditions, the user switches the travel mode of the tractor 1 from the manual travel mode to the automatic travel mode. Then, in this state, the automatic travel control can be restarted by operating the display device 50 of the mobile communication terminal 5 to provide a command of starting the automatic travel.

The automatic travel control with the automatic travel control part 23F includes the engine automatic control processing for sending a control command for automatic travel related to the engine 14 to the engine control part 23A, the vehicle speed automatic control processing for sending a control command for automatic travel related to switching of the vehicle speed and forward and reverse traveling of the tractor 1 to the transmission unit control part 23B, the steering automatic control processing for sending a control command for automatic travel related to steering to the steering control part 23C, the work automatic control processing for sending a control command for automatic travel related to a work device such as the rotary tiller 3 to the work device control part 23D, etc.

In the engine automatic control processing, the automatic travel control part 23F sends an engine rotational speed change command for providing an instruction for changing the engine rotational speed, based on a set rotational speed included in the target path P, etc., to the engine control part 23A. The engine control part 23A executes the engine rotational speed changing control for automatically changing the engine rotational speed in response to various kinds of control commands related to the engine 14 that are sent from the automatic travel control part 23F.

In the vehicle speed automatic control processing, the automatic travel control part 23F sends, to the transmission unit control part 23B, a transmission operation command as an instruction for a transmission operation of the main transmission device 32, based on a target vehicle speed included in the target path P, a forward-reverse traveling switching command as an instruction for a forward-reverse traveling switching operation of the forward-reverse traveling switching device 33, based on the traveling direction, etc., of the tractor 1 included in the target path P, etc. In response to the various kinds of control commands related to the main transmission device 32, the forward-reverse traveling switching device 33, etc., which are sent from the automatic travel control part 23F, the transmission unit control part 23B executes the automatic vehicle speed control for automatically controlling the operation of the main transmission device 32, the automatic forward-reverse traveling switching control for automatically controlling the operation of the forward-reverse traveling switching device 33, etc. For example, the automatic vehicle speed control includes an automatic deceleration-and-stop processing for controlling the main transmission device 32 to decelerate to the zero-speed state so as to make the tractor 1 stop traveling in a case where the target vehicle speed included in the target path P is zero speed, etc.

In the steering automatic control processing, the automatic travel control part 23F sends a steering command as an instruction for steering the left and right front wheels 10, based on the front wheel steering angle or the like that is included in the target path P, etc., to the steering control part 23C. The steering control part 23C executes an automatic steering control for controlling the operation of the power steering unit 17 in order to steer the left and right front wheels 10, an automatic braking-and-turning control for operating the brake unit 18 in order to operate the brake 31 on the inner side of a turn in a case where the left and right front wheels 10 are steered at a set angle or more, etc., in response to a steering command that is sent from the automatic travel control part 23F.

In the working automatic control processing, the automatic travel control part 23F sends a working start command as an instruction for switching the rotary tiller 3 to the working state, based on the work starting position p3 included in the target path P, a work stopping command as an instruction for switching the rotary tiller 3 to the non-working state, based on the work stopping position p4 included in the target path P, etc., to the work device control part 23D. The work device control part 23D executes an automatic working start control for controlling the operation of the work clutch unit 19 and the lift drive unit 20 in order to lower the rotary tiller 3 down to the working height and drive the rotary tiller 3, an automatic working stop control for stopping the rotary tiller 3 and lifting the rotary tiller 3 up to the non-working height, etc., in response to various kinds of control commands related to the rotary tiller 3, which are sent from the automatic travel control part 23F.

That is, the above-described automatic travel unit 4 includes the power steering unit 17, the brake unit 18, the work clutch unit 19, the lift drive unit 20, the rolling unit 21, the vehicle state detection device 22, the in-vehicle control unit 23, the positioning unit 42, the communication modules 46 and 48, etc. Further, when these operate properly, it is possible to make the tractor 1 automatically travel with high precision according to the target path P and to make the rotary tiller 3 perform the tillage work properly.

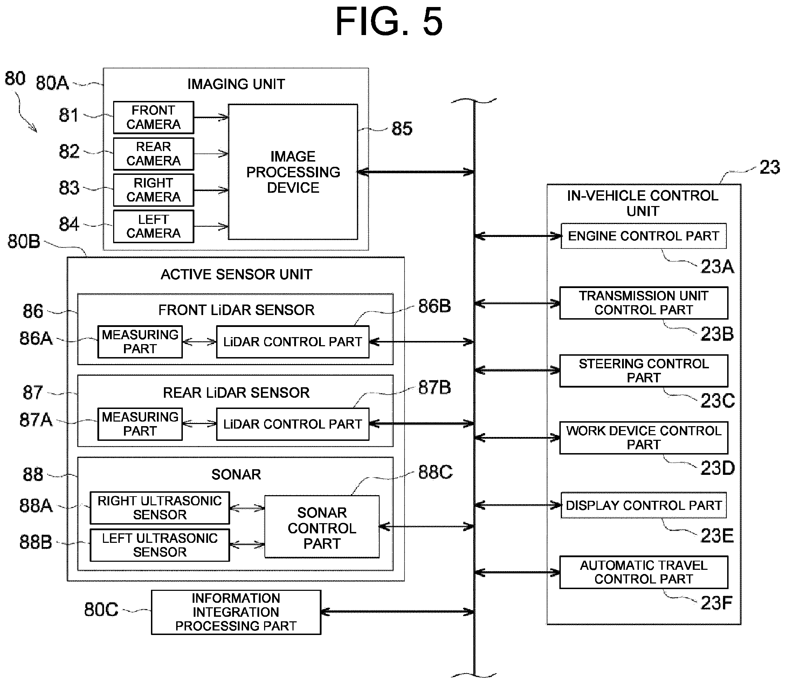

As illustrated in FIG. 2 and FIG. 5, the tractor 1 is equipped with the obstacle detection unit 80 that monitors the surroundings of the tractor 1 and detects obstacles existing in the surroundings. Obstacles detected by the obstacle detection unit 80 include a person such as a worker working in the field A, another work vehicle, a utility pole, tree, and the like existing in the field A, etc.

As illustrated in FIG. 1 and FIG. 5, the obstacle detection unit 80 includes the imaging unit 80A that captures images of the surroundings of the tractor 1, the active sensor unit 80B that measures the distance to a measurement target object existing in the surroundings of the tractor 1, and the information integration processing part 80C that integrates and processes information from the imaging unit 80A and measurement information from the active sensor unit 80B.

The imaging unit 80A includes the front camera 81 for which a predetermined range in the front of the cabin 13 is set as the imaging range, the rear camera 82 for which a predetermined range behind the cabin 13 is set as the imaging range, the right camera 83 for which a predetermined range to the right of the cabin 13 is set as the imaging range, the left camera 84 for which a predetermined range to the left of the cabin 13 is set as the imaging range, and the image processing device 85 that processes images from the respective cameras 81 to 84.

The active sensor unit 80B includes the front LiDAR sensor 86 for which a predetermined range in the front of the cabin 13 is set as the measurement range, the rear LiDAR sensor 87 for which a predetermined range behind the cabin 13 is set as the measurement range, and the sonar 88 for which a predetermined range to the right of the cabin 13 and a predetermined range to the left of the cabin 13 are set as the measurement range. The LiDAR sensors 86 and 87 respectively include measuring parts 86A and 87A that use a laser light (for example, a pulsed near-infrared laser light), which is an example of measurement light, so as to perform measurement in the measurement ranges, and the LiDAR control parts 86B and 87B that generate distance images, etc., based on the measurement information from the measuring parts 86A and 87A. The sonar 88 includes the right ultrasonic sensor 88A, the left ultrasonic sensor 88B, and the single sonar control part 88C.

The information integration processing part 80C, the image processing device 85, each of the LiDAR control parts 86B and 87B, and the sonar control part 88C are constructed with an electronic control unit in which a microcontroller, etc., are integrated, various kinds of control programs, etc. The information integration processing part 80C, the image processing device 85, each of the LiDAR control parts 86B and 87B, and the sonar control part 88C are connected to the in-vehicle control unit 23 in a mutually communicable manner via the CAN.

The front camera 81 and the rear camera 82 are arranged on the left-right center line of the tractor 1. The front camera 81 is arranged at a left-right center position on the front upper side of the cabin 13 in a front-lowering posture so as to look down the front of the tractor 1 from a diagonally upper side. Accordingly, a predetermined range in the front of the vehicle body with a symmetrical axis being the left-right center line of the tractor 1 is set as the imaging range of the front camera 81. The rear camera 82 is arranged at a left-right center position on the rear upper side of the cabin 13 in a rear-lowering posture so as to look down the rear of the tractor 1 from a diagonally upper side. Accordingly, a predetermined range in the rear of the vehicle body with a symmetrical axis being the left-right center line of the tractor 1 is set as the imaging range of the rear camera 82. The right camera 83 is arranged at a front-rear center position on the right upper side of the cabin 13 in a right-lowering posture so as to look down the right of the tractor 1 from a diagonally upper side. Accordingly, a predetermined range to the right of the vehicle body is set as the imaging range of the right camera 83. The left camera 84 is arranged at a front-rear center position on the left upper side of the cabin 13 in a left-lowering posture so as to look down the left of the tractor 1 from a diagonally upper side. Accordingly, a predetermined range to the left of the vehicle body is set as the imaging range of the left camera 84.

In the respective LiDAR sensors 86 and 87, the measuring parts 86A and 87A measure the distance from the respective measuring parts 86A and 87A to each measurement point in the measurement range by the TOF (Time Of Flight) method, in which the distance to the measurement point is measured based on the round-trip time for an emitted laser light to return after reaching the measurement point. Each of the measuring parts 86A and 87Aperforms scanning horizontally and vertically with a laser light at a high speed across the entire measurement range and sequentially measures the distance to the measurement point at each scan angle (coordinates), in order to perform three-dimensional measurement in the respective measurement ranges. Each of the measuring parts 86A and 87A sequentially measures intensity of reflected light (hereinafter referred to as reflection intensity) from each measurement point that is obtained when scanning is performed horizontally and vertically with a laser light at a high speed across the entire measurement range. Each of the measuring parts 86A and 87A repeatedly measures the distance to each measurement point in the measurement range, each reflection intensity, etc., on a real time basis. Each of the LiDAR control parts 86B and 87B generates a distance image and extracts a group of measurement points that is estimated as an obstacle, based on measurement information such as the distance to each measurement point detected by each of the measuring parts 86A and 87A and the scan angle (coordinates) of each measurement point, in order to send the measurement information related to the extracted group of measurement points to the information integration processing part 80C as measurement information related to an obstacle candidate.

As with the front camera 81 and the rear camera 82, the front LiDAR sensor 86 and the rear LiDAR sensor 87 are arranged on the left-right center line of the tractor 1. The front LiDAR sensor 86 is arranged at a left-right center position on the front upper side of the cabin 13 in a front-lowering posture so as to look down the front of the tractor 1 from a diagonally upper side. Accordingly, a predetermined range in the front of the vehicle body with a symmetrical axis being the left-right center line of the tractor 1 is set as the measurement range of the measuring part 86A of the front LiDAR sensor 86. The rear LiDAR sensor 87 is arranged at a left-right center position on the rear upper side of the cabin 13 in a rear-lowering posture so as to look down the rear of the tractor 1 from a diagonally upper side. Accordingly, a predetermined range in the rear of the vehicle body with a symmetrical axis being the left-right center line of the tractor 1 is set as the measurement range of the measuring part 87A of the rear LiDAR sensor 87.

Regarding the sonar 88, the sonar control part 88C determines whether or not a measurement target object exists in the measurement range, based on ultrasonic waves sent and received by the left and right ultrasonic sensors 88A and 88B. The sonar control part 88C measures the distance from the respective ultrasonic sensors 88A and 88B to a measurement target object by the TOF (Time Of Flight) method, in which the distance to the measurement point is measured based on the round-trip time for an emitted ultrasonic wave to return after reaching the measurement point, and sends the distance to the measured measurement target object and the direction of the measurement target object to the information integration processing part 80C as the measurement information related to an obstacle candidate.

Although not illustrated in the drawings, the right ultrasonic sensor 88A is attached in a posture facing the right outer side of the vehicle body to a boarding step on the right side that is arranged between the front wheel 10 on the right side and the rear wheel 11 on the right side. Accordingly, a predetermined range on the right outer side of the vehicle body is set as the measurement range of the right ultrasonic sensor 88A. As illustrated in FIG. 1, the left ultrasonic sensor 88B is attached in a posture facing the left outer side of the vehicle body to the boarding step 24 on the left side that is arranged between the front wheel 10 on the left side and the rear wheel 11 on the left side. Accordingly, a predetermined range on the left outer side of the vehicle body is set as the measurement range of the left ultrasonic sensor 88B.

The image processing device 85 performs image processing on the images that are sequentially sent from the respective cameras 81 to 84. A learning process for recognizing a person such as a worker who works in the field A, another work vehicle, a utility pole or tree existing in the field A, etc., as obstacles is performed on the image processing device 85.

The image processing device 85 synthesizes the images that are sequentially sent from the respective cameras 81 to 84 to generate an entire periphery image (for example, a surround view) of the tractor 1 and sends the generated entire periphery image and the images from the respective cameras 81 to 84 to the display control part 23E of the tractor 1 and the display control part 51A of the mobile communication terminal 5.

Accordingly, the entire periphery image generated by the image processing device 85, an image of the travel direction of the tractor 1, etc., can be displayed on the operation terminal 27 of the tractor 1, the display device 50 of the mobile communication terminal 5, etc. Further, by such displaying, the user can visually recognize the situation in the surroundings of the tractor 1 and the situation in the travel direction.

The image processing device 85 determines whether or not an obstacle that affects the traveling of the tractor 1 exists in the imaging ranges of the respective cameras 81 to 84, based on the images that are sequentially sent from the respective cameras 81 to 84. In a case where an obstacle exists, the image processing device 85 finds the coordinates of the obstacle in the image in which the obstacle exists and converts the found coordinates of the obstacle into the coordinates whose origin is the vehicle body coordinates, based on the mounting positions, mounting angles, etc., of the respective cameras 81 to 84. Further, the linear distance between the coordinates after the conversion and the preset reference point of distance calculation is found as the distance from the reference point of distance calculation to the obstacle, and the distance from the coordinates after the conversion to the found obstacle is sent to the information integration processing part 80C as information related to an obstacle. On the other hand, in a case where no obstacle exists, information indicating that an obstacle has not been detected will be sent to the information integration processing part 80C.

Accordingly, since the image processing device 85 sends information related to an obstacle to the information integration processing part 80C in a case where an obstacle exists in any of the imaging ranges of the respective cameras 81 to 84, it is possible for the information integration processing part 80C to grasp that an obstacle exists in the imaging ranges of any of the respective cameras 81 to 84 and to obtain the position of the obstacle and the distance to the obstacle by receiving the information related to an obstacle. Further, since the image processing device 85 sends information indicating that an obstacle has not been detected to the information integration processing part 80C in a case where no obstacle exists in any of the imaging ranges of the respective cameras 81 to 84, it is possible for the information integration processing part 80C to grasp that no obstacle exists in any of the imaging ranges of the respective cameras 81 to 84.

In a case where information related to an obstacle obtained from the imaging unit 80A, which has high accuracy of object determination, matches information related to an obstacle candidate obtained from the active sensor unit 80B, which has high accuracy of distance measurement, the information integration processing part 80C adopts the distance to the obstacle candidate obtained from the active sensor unit 80B as the distance to the obstacle. Accordingly, the information integration processing part 80C of the obstacle detection unit 80 can obtain information related to an obstacle with high accuracy of object determination and high accuracy of distance measurement. The obstacle detection unit 80 sends the information related to an obstacle, which is obtained in the information integration processing part 80C, to the automatic travel control part 23F.

The automatic travel control part 23F executes collision avoidance control for avoiding collision with an obstacle, based on the information related to an obstacle obtained from the obstacle detection unit 80. In the collision avoidance control, the automatic travel control part 23F is configured to obtain the distance to an obstacle based on the information related to the obstacle from the obstacle detection unit 80 and perform various kinds of collision avoidance processing as appropriate according to the obtained distance to the obstacle or the like, such as notification processing for operating an alarm such as a notification buzzer or notification lamp installed in the tractor 1 and the mobile communication terminal 5, automatic deceleration processing for automatically decreasing the vehicle speed of the tractor 1, and automatic travel stopping processing for automatically stopping the traveling of the tractor 1.

In a case where a command of starting the automatic travel is provided in a state where the tractor 1 is positioned at the start position p1 of the automatic travel, the automatic travel control part 23F starts the automatic travel control for making the tractor 1 perform the automatic travel according to the target path P. The automatic travel control includes the first automatic travel control for causing the tractor 1 to perform the automatic travel in the working state according to the parallel paths P1, based on the parallel paths P1 of the target path P and the positioning information from the positioning unit 42, and the second automatic travel control for causing the tractor 1 to perform the automatic travel in the non-working state according to the connection paths P2, based on the connection paths P2 of the target path P and the positioning information from the positioning unit 42.

As illustrated in FIG. 2, the automatic travel control part 23F includes the entry area setting part 23Fa that sets the entry area Aa (see FIG. 4) of the tractor 1 for each parallel path P1, the deviation detection part 23Fb that detects the angular deviation Δθ of the tractor 1 in the yaw direction relative to the parallel path P1 (see FIG. 6 to FIG. 8) and the lateral deviation Δd (see FIG. 6 to FIG. 8) at the point in time where the tractor 1 reaches the entry area Aa, based on the parallel path P1 and the positioning information from the positioning unit 42, and the condition determination part 23Fc that determines whether or not the starting condition of the first automatic travel control is satisfied based on the detection information from the deviation detection part 23Fb in a case where the tractor 1 reaches the entry area Aa.

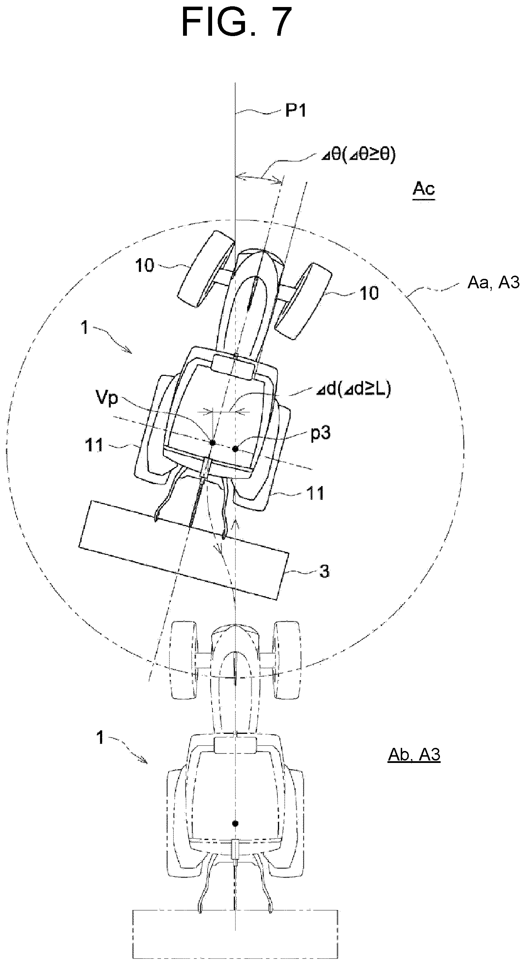

As illustrated in FIG. 4 and FIG. 6 to FIG. 9, the entry area setting part 23Fa sets a predetermined area including the starting end position p3 of each parallel path P1 as the entry area Aa for each parallel path P1. As illustrated in FIG. 6, the condition determination part 23Fc determines that the starting condition of the first automatic travel control is satisfied in a case where the above-described angular deviation Δθ is less than the predetermined angle θ (for example, 10 degrees) and the above-described lateral deviation Δd is less than the predetermined value L (5 cm). As illustrated in FIG. 7 to FIG. 8, the condition determination part 23Fc determines that the starting condition of the first automatic travel control is not satisfied in a case where the above-described angular deviation Δθ is equal to or more than the predetermined angle θ or the above-described lateral deviation Δd is equal to or more than the predetermined value L.

The automatic travel control part 23F executes the first automatic travel control (see FIG. 6) in a case where the condition determination part 23Fc determines that the starting condition of the first automatic travel control is satisfied at the point in time where the tractor 1 reaches the entry area Aa by manual driving with a user or by automatic travel with the second automatic travel control. Further, in a case where the condition determination part 23Fc determines that the starting condition of the first automatic travel control is not satisfied, the automatic position adjustment travel control for causing the tractor 1 to perform position adjustment travel with an operation combining the forward-reverse traveling switching operation and the steering operation of the tractor 1 (see FIG. 7 to FIG. 9) is executed so that the starting condition of the first automatic travel control will be satisfied.

That is, the automatic travel control part 23F performs the travel control switching processing for switching the travel control to be executed based on the determination of the condition determination part 23Fc between the first automatic travel control and the automatic position adjustment travel control when the tractor 1 reaches the entry area Aa by manual driving with a user or by automatic travel with the second automatic travel control.

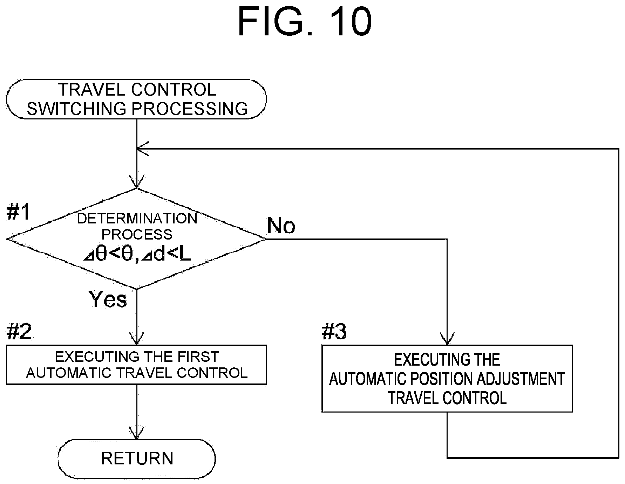

Then, as illustrated in the flowchart in FIG. 10, in this travel control switching processing, first, the automatic travel control part 23F performs a determination process in which the condition determination part 23Fc determines whether or not the starting condition of the first automatic travel control is satisfied when the tractor 1 reaches the above-described entry area Aa (Step #1).

Further, as illustrated in FIG. 6, since the condition determination part 23Fc determines in the determination process that the starting condition of the first automatic travel control is satisfied in a case where the above-described angular deviation Δθ is less than the predetermined angle θ and the above-described lateral deviation Δd is less than the predetermined value L when the tractor 1 reaches the above-described entry area Aa, the automatic travel control part 23F executes the first automatic travel control to cause the tractor 1 to perform the automatic travel in the working state according to the parallel paths P1 (Step #2). Accordingly, it is possible for the tractor 1 to work while performing highly precise automatic travel with a small fluctuation relative to the parallel path P1 from the stage where the automatic travel with the first automatic travel control is started.

Further, as illustrated in FIG. 7 to FIG. 9, since the condition determination part 23Fc determines in the determination process that the starting condition of the first automatic travel control is not satisfied in a case where the above-described angular deviation Δθ is equal to or more than the predetermined angle θ or the above-described lateral deviation Δd is equal to or more than the predetermined value L when the tractor 1 reaches the above-described entry area Aa, the automatic travel control part 23F executes the automatic position adjustment travel control (Step #3) without executing the first automatic travel control and performs the above-described determination process (Step #1).

Accordingly, it is possible to prevent the occurrence of such an inconvenience in which the fluctuation of the tractor 1 relative to the parallel path P1 becomes large due to execution of the first automatic travel control in a case where the above-described angular deviation Δθ is equal to or more than the predetermined angle θ or the above-described lateral deviation Δd is equal to or more than the predetermined value L, which takes a long distance to converge this fluctuation and causes the work precision during this period to be deteriorated.

Further, since the automatic travel control part 23F satisfies the starting condition of the first automatic travel control by the position adjustment travel of the tractor 1, it is no longer necessary to generate a long movement path on the extension line of the starting end position p3 side on each parallel path P1 in order to make it easier to satisfy the starting condition of the first automatic travel control. Accordingly, it is possible to prevent the occurrence of such an inconvenience that, due to the parallel path P1 for causing the tractor 1 to perform the automatic travel in the working state becoming shorter and the headland area A2a becoming wider as the movement path in the field A becomes longer, for example, in a case where the headland area A2a is the orbiting work area in which the tractor 1 is made to perform orbiting travel, the number of times the tractor 1 orbits the orbiting work area increases and the work efficiency is deteriorated, etc.

As illustrated in FIG. 2 and FIG. 7 to FIG. 8, the automatic travel control part 23F includes the travel area selection part 23Fd that selects the travelable area A3 of the tractor 1 in the automatic position adjustment travel control from among the above-described entry area Aa and the predetermined travel-direction upstream area Ab and travel-direction downstream area Ac, which sandwich the entry area Aa in the travel direction of the tractor 1 on each parallel path P1. The travel area selection part 23Fd selects the travelable area A3 of the tractor 1, based on the width of the headland area A2a, the type of the work device 3, etc., that are set by the user when the target path generation part 51B generates the target path P.

Specifically, for example, in a case where the headland width W (see FIG. 4) from the shape specification line SL to the central area A2b of the headland area A2a is set to be wider than the work width of the work device 3 and thus the travel-direction upstream area Ab of the entry area Aa is wide, since there is no risk that the work device 3 that is coupled to the tractor 1 comes into contact with another object such as a ridge adjacent to the field A even if the position adjustment travel of the tractor 1 is performed in the travel-direction upstream area Ab, the travel area selection part 23Fd enables selection of the travel-direction upstream area Ab in addition to the entry area Aa as the travelable area A3.

For example, in a case where the headland width W of the headland area A2a is set to be narrow to an extent that is enough for turn-traveling of the tractor 1 with the minimum turning radius and thus the travel-direction upstream area Ab of the entry area Aa is narrow, since there is a risk that the work device 3 that is coupled to the tractor 1 comes into contact with a ridge or the like if the position adjustment travel of the tractor 1 is performed in the travel-direction upstream area Ab, the travel area selection part 23Fd disables the selection of the travel-direction upstream area Ab as the travelable area A3.

The travel area selection part 23Fd enables selection of the travel-direction downstream area Ac in addition to the entry area Aa as the travelable area A3 in a case where, for example, the type of the work device 3 is one such as a rotary tiller (see FIG. 1) or plow (not illustrated in the drawings) with which, even though the tractor 1 enters the travel-direction downstream area Ac and performs the position adjustment travel, there is hardly an influence on the work to be performed thereafter in the travel-direction downstream area Ac.

The travel area selection part 23Fd disables the selection of the travel-direction downstream area Ac as the travelable area A3 in a case where, for example, the type of the work device 3 is one such as a seeder (not illustrated in the drawings) or harvesting device (not illustrated in the drawings) with which, if the tractor 1 enters the travel-direction downstream area Ac and performs the position adjustment travel, there tends to be an influence on the work to be performed thereafter in the travel-direction downstream area Ac.

In a case where the travel-direction upstream area Ab and the travel-direction downstream area Ac can be selected as the travelable area A3 in addition to the entry area Aa and in a case where the travel-direction upstream area Ab can be selected as the travelable area A3 in addition to the entry area Aa, the travel area selection part 23Fd selects the entry area Aa and the travel-direction upstream area Ab as the travelable area A3. Accordingly, it is possible to widen the travelable area A3 for performing the position adjustment travel while avoiding the tractor 1 from entering the travel-direction downstream area Ac at the time of the position adjustment travel. As a result, the starting condition of the first automatic travel control can be easily satisfied while avoiding the risk that, due to the entry of the tractor 1 into the travel-direction downstream area Ac, there will be a trouble in the work to be performed thereafter by the work device 3.

Note that, as illustrated in FIG. 7, in the automatic position adjustment travel control in a case where the entry area Aa and the travel-direction upstream area Ab are selected as the travelable area A3, the automatic travel control part 23F steers the left and right front wheels 10 while making the tractor 1 perform forward and reverse traveling in the travelable area A3 including the entry area Aa and the travel-direction upstream area Ab, so as to thereby make the above-described angular deviation Δθ less than the predetermined angle θ and make the above-described lateral deviation Δd less than the predetermined value L.

In a case where the travel-direction downstream area Ac can be selected as the travelable area A3 in addition to the entry area Aa, the travel area selection part 23Fd selects the entry area Aa and the travel-direction downstream area Ac as the travelable area A3. Accordingly, it is possible to widen the travelable area A3 for performing the position adjustment travel while avoiding the tractor 1 from entering the travel-direction upstream area Ab during the position adjustment travel. As a result, the starting condition of the first automatic travel control can be easily satisfied while avoiding the risk that, due to the entry of the tractor 1 into the travel-direction upstream area Ab, the work device 3 coupled to the tractor 1 comes into contact with another object such as a ridge.

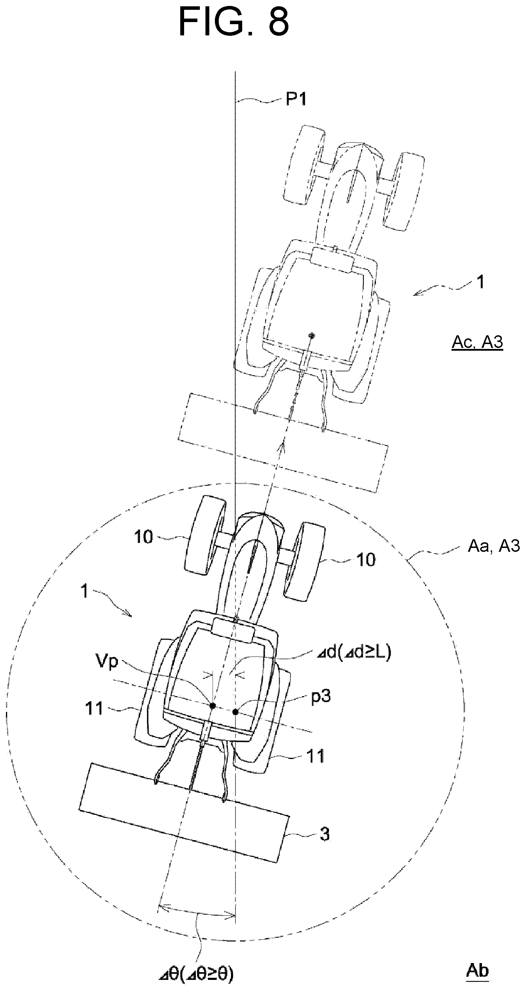

Note that, as illustrated in FIG. 8 to FIG. 9, in the automatic position adjustment travel control in a case where the entry area Aa and the travel-direction downstream area Ac are selected as the travelable area A3, the automatic travel control part 23F steers the left and right front wheels 10 while making the tractor 1 perform forward and reverse traveling in the travelable area A3 including the entry area Aa and the travel-direction downstream area Ac, so as to thereby make the above-described angular deviation Δθ less than the predetermined angle θ and make the above-described lateral deviation Δd less than the predetermined value L.

In a case where only the entry area Aa can be selected as the travelable area A3, the travel area selection part 23Fd selects only the entry area Aa as the travelable area A3. Accordingly, it is possible to ensure the travelable area A3 for performing the position adjustment travel while avoiding the tractor 1 from entering the travel-direction upstream area Ab and the travel-direction downstream area Ac during the position adjustment travel. As a result, the starting condition of the first automatic travel control can be satisfied while avoiding the risk that, due to the entry of the tractor 1 into the travel-direction upstream area Ab, the work device 3 coupled to the tractor 1 comes into contact with another object, such as a ridge, and the risk that, due to the entry of the tractor 1 into the travel-direction downstream area Ac, there is a trouble in the work to be performed thereafter by the work device 3.

In the automatic position adjustment travel control, such a setting that enables the tractor 1 to perform multiple times of position adjustment travel in the travelable area A3. Accordingly, for example, even in a case where the travel area selection part 23Fd selects only the entry area Aa as the travelable area A3 and thus the travelable area A3 is narrow, it is possible to surely satisfy the starting condition of the first automatic travel control by the position adjustment travel of the tractor 1 in the travelable area A3.

In the position adjustment travel of the tractor 1 in the automatic position adjustment travel control, the automatic travel control part 23F transitions from the automatic position adjustment travel control to the first automatic travel control in a case where the condition determination part 23Fc determines that the starting condition of the first automatic travel control is satisfied. Accordingly, in a case where the starting condition of the first automatic travel control is satisfied by the position adjustment travel of the tractor 1 with the automatic position adjustment travel control, the tractor 1 will immediately work, along with the satisfaction of the starting condition, while performing the automatic travel according to the parallel path P1 in a state of high precision with a small fluctuation relative to the parallel path P1. As a result, it is possible to improve the work efficiency while improving the work precision.

As illustrated in FIG. 4, the target path P can be generated so as to include the movement path Rm (the path illustrated with a dashed line in FIG. 4) between the standby position p0 of the tractor 1, which is away from each parallel path P1, and the starting end position p3 of the parallel path P1 that is set as the first parallel path in the travel order of the tractor 1. In FIG. 4, the standby position p0 is set near the entry/exit of the field A for the tractor 1. The setting of the standby position p0 can be changed in various ways depending on the shape of the field, etc.

In a case where the target path P includes the movement path Rm, it is possible for the automatic travel control part 23F to execute the automatic moving control for causing the tractor 1 to perform the automatic travel in the non-working state according to the movement path Rm in the automatic travel control, based on the movement path Rm and the positioning information from the positioning unit 42.

In the automatic moving control, the entry area setting part 23Fa sets a predetermined area including the starting end position p3 of the first parallel path P1, which is the connection position between the parallel path P1 that is set as the first parallel path in the travel order of the tractor 1 and the movement path Rm, as the entry area Aa.

Thereby, if the tractor 1 is made to start the automatic travel after being positioned at the standby position p0, the automatic travel control part 23F executes the automatic moving control, so as to cause the tractor 1 to perform the automatic travel in the non-working state according to the movement path Rm from the standby position p0 toward the entry area Aa. Further, in a case where the starting condition of the first automatic travel control is satisfied when the tractor 1 reaches the entry area Aa in this automatic travel, the automatic travel control part 23F executes the first automatic travel control, so as to cause the tractor 1 to perform the automatic travel in the working state according to the parallel path P1. In addition, in a case where the starting condition of the first automatic travel control is not satisfied, the automatic travel control part 23F executes the automatic position adjustment travel control without executing the first automatic travel control, so as to cause the tractor 1 to perform the position adjustment travel. Further, in a case where the starting condition of the first automatic travel control is satisfied by this position adjustment travel, the automatic travel control part 23F executes the first automatic travel control, so as to cause the tractor 1 to perform the automatic travel in the working state according to the parallel path P1.

That is, in a case where the target path P includes the movement path Rm, it is possible to cause the tractor 1 to perform the automatic travel with high precision for the entire length of the target path P including the movement path Rm. Accordingly, the user is no longer required to manually drive the tractor 1 to the starting end position p3 of the parallel path P1 that is set as the first parallel path in the travel order of the tractor 1, so that the burden on the user can be reduced.

### [Other Embodiments]

An explanation will be given on other embodiments of the present invention. Note that the configuration of each of the other embodiments explained below can be applied in combination with the configuration of another embodiment, not only be applied independently.
(1) Other typical embodiments regarding the configuration of the work vehicle 1 are as follows. For example, it is also possible that the work vehicle 1 is configured to have a semi-crawler specification equipped with left and right crawlers instead of the left and right rear wheels 11. For example, it is also possible that the work vehicle 1 is configured to have a full-crawler specification equipped with the left and right crawlers instead of the left and right front wheels 10 and the left and right rear wheels 11. For example, it is also possible that the work vehicle 1 is configured to have a rear wheel steering specification in which the left and right rear wheels 11 function as steering wheels. For example, it is also possible that the work vehicle 1 is configured to have an electric specification equipped with an electric motor instead of the engine 14. For example, it is also possible that the work vehicle 1 is configured to have a hybrid specification equipped with the engine 14 and an electric motor.
(2) It is also possible that the automatic travel system for a work vehicle is configured so that the automatic travel control part 23F executes the above-described first automatic travel control and automatic position adjustment travel control and the turn movement in which the work vehicle 1 is made to move from the currently-traveling parallel path P1 to the next parallel path P1 is performed by manual driving with a user.
(3) It is also possible that, for example, in a case where the work vehicle 1 is a harvesting work vehicle such as a combine and the first automatic travel control needs to be suspended due to detection of a full sensor detecting that the harvest is full during execution of the first automatic travel control, the entry area setting part 23Fa is configured to set a predetermined area (for example, the area indicated with a dashed line in FIG. 4) including the suspension position of the work on the parallel path P1 at that time (for example, the position illustrated with the reference sine p5 in FIG. 4) as the entry area Aa of that parallel path P1.
(4) It is also possible that, for example, in a case where the work vehicle 1 is a work vehicle for supplying agricultural materials, such as a seeder or transplanter that supplies a field with agricultural materials such as seeds or seedlings, and the first automatic travel control needs to be suspended due to detection of a remaining amount sensor detecting that the remaining amount of an agricultural material reaches the lower limit value during execution of the first automatic travel control, the entry area setting part 23Fa is configured to set a predetermined area including the suspension position of the work on the parallel path P1 at that time as the entry area Aa of that parallel path P1.

### [Addendum of the Invention]

The first characteristic configuration of the present invention is an aspect that an automatic travel system for a work vehicle includes: an entry area setting part that sets an entry area of the work vehicle for a plurality of parallel paths that are arranged with a predetermined interval; a measuring part that measures a position and an orientation of the work vehicle; an automatic travel control part that executes a first automatic travel control for causing the work vehicle to perform automatic travel according to the parallel paths in a working state, based on the parallel paths and positioning information from the positioning part; a deviation detection part that detects an angular deviation and a lateral deviation of the work vehicle relative to the parallel paths at a point in time where the work vehicle reaches the entry area, based on the parallel paths and the positioning information from the measuring part; and a condition detection part that determines whether or not a starting condition of the first automatic travel control is satisfied, based on detection information from the deviation detection part, in a case where the work vehicle reaches the entry area, wherein the condition detection part determines that the starting condition of the first automatic travel control is satisfied in a case where the angular deviation is less than a predetermined angle and the lateral deviation is less than a predetermined value, and, at the point in time where the work vehicle reaches the entry area, the automatic travel control part executes the first automatic travel control in a case where the condition determination part determines that the starting condition of the first automatic travel control is satisfied and executes automatic position adjustment travel control for causing the work vehicle to perform position adjustment travel by an operation combining a forward-reverse traveling switching operation and a steering operation of the work vehicle so as to satisfy the starting condition of the first automatic travel control in a case where the condition determination part determines that the starting condition of the first automatic travel control is not satisfied.

According to the present configuration, in a case where the above-described angular deviation is less than the predetermined angle and the above-described lateral deviation is less than the predetermined value when the work vehicle reaches the above-described entry area, the automatic travel control part executes the first automatic travel control, so as to cause the work vehicle to perform the automatic travel in the working state according to a parallel path. Accordingly, it is possible for the work vehicle to work while performing highly precise automatic travel with a small fluctuation relative to the parallel path from the stage where the automatic travel is started.

On the other hand, in a case where the above-described angular deviation is equal to or more than the predetermined angle or the above-described lateral deviation is equal to or more than the predetermined value when the work vehicle reaches the above-described entry area, the automatic travel control part executes the automatic position adjustment travel control without executing the first automatic travel control. Accordingly, it is possible to prevent the occurrence of such an inconvenience in which the work vehicle starts automatic travel with low precision with a large fluctuation relative to the parallel path due to execution of the first automatic travel control in a case where the above-described angular deviation is equal to or more than the predetermined angle or the above-described lateral deviation is equal to or more than the predetermined value, which takes a long distance to converge this fluctuation and causes the work precision during this period to be deteriorated.

Further, since the automatic travel control part makes the above-described angular deviation and lateral deviation smaller during both forward traveling and reverse traveling by the position adjustment travel of the work vehicle so as to satisfy the starting condition of the first automatic travel control, it is no longer necessary to generate a long movement path on the extension line of the parallel path in order to make it easier to satisfy the starting condition of the first automatic travel control. In particular, in a case of an agricultural work vehicle which tends to have a front wheel steering specification, reverse traveling is preferable for shortening the above-described movement path since the operation for positioning the work vehicle to the parallel path is easier during reverse traveling as compared to during forward traveling.

Accordingly, it is possible to prevent the occurrence of such an inconvenience in which the parallel paths on which the work vehicle is made to perform the automatic travel in the working state become shortened as the movement paths in the work site become longer and, because of this, for example, in a case where the area for generating the parallel paths (work area) is a cropping area, the planting acreage becomes narrow and thus the harvest amount of crops is reduced, an inconvenience in which, in a case where the area for generating the parallel paths is a reciprocating work area in which the work vehicle is made to travel in a reciprocating manner and the area for generating the movement paths is an orbiting work area in which the work vehicle is made to travel in an orbiting manner, the number of times the work vehicle orbits the orbiting work area increases and thus the work efficiency is deteriorated, etc.

As a result, it is possible to cause the work vehicle to perform the automatic travel with high precision according to the parallel paths without causing a decrease in the harvest amount or a deterioration in the work efficiency, and thus the work precision of the work vehicle in the automatic travel can be improved.

The second characteristic configuration of the present invention is an aspect of including a travel area selection part that selects a travelable area of the work vehicle in the automatic position adjustment travel control from among the entry area and a travel-direction upstream area and a travel-direction downstream area, which sandwich the entry area in a travel direction of the work vehicle on the parallel paths.

According to the present configuration, for example, in a case where the entry area is the predetermined area including the starting end position of a parallel path, the travel-direction upstream area will be included in the headland area on the upstream side of the travel direction relative to the starting end position of the parallel path, and thus the travel-direction downstream area will be included in the work area in which the parallel path is arranged.

In this case, if the work of the work vehicle is a tillage work or the like with which, even though the work vehicle enters the travel-direction downstream area and performs the position adjustment travel, there is hardly an influence on the work to be performed thereafter in the travel-direction downstream area, it is possible to select the travel-direction downstream area as the travelable area in addition to at least the entry area. Accordingly, it is possible to widen the travelable area to easily perform the position adjustment travel of the work vehicle in the travelable area, so that the starting condition of the first automatic travel control can be easily satisfied in the travelable area.

Contrarily, if the work of the work vehicle is a seeding work, seedling planting work, or the like with which, if the work vehicle enters the travel-direction downstream area and performs the position adjustment travel, there tends to be an influence on the work to be performed thereafter in the travel-direction downstream area, it is possible to select the entry area and the travel-direction upstream area as the travelable area, so as to exclude the travel-direction downstream area from the travelable area. Accordingly, while avoiding the work precision from being deteriorated due to the position adjustment travel of the work vehicle in the travel-direction downstream area, it is possible to widen the travelable area to easily perform the position adjustment travel of the work vehicle in the travelable area, so that the starting condition of the first automatic travel control can be easily satisfied in the travelable area.

On the other hand, in a case where the entry area is the predetermined area including a suspension position of the first automatic travel control in a parallel path, the travel-direction upstream area will be included in a work-executed area on the upstream side in the travel direction relative to the suspension position, and the travel-direction downstream area will be included in a work-unexecuted area on the downstream side in the travel direction relative to the suspension position.

In this case, if the work of the work vehicle is a harvesting work, it is possible to select the entry area and the travel-direction upstream area as the travelable area, so as to exclude the travel-direction downstream area from the travelable area. Accordingly, while avoiding the occurrence of such an inconvenience in which unharvested crops are stomped down by position adjustment travel of the work vehicle in the travel-direction downstream area, it is possible to widen the travelable area to easily perform the position adjustment travel of the work vehicle in the travelable area, so that the starting condition of the first automatic travel control can be easily satisfied in the travelable area.

In addition, if the work of the work vehicle is a tillage work or the like, it is possible to select the entry area and the travel-direction downstream area as the travelable area, so as to exclude the travel-direction upstream area from the travelable area. Accordingly, while avoiding the occurrence of such an inconvenience in which the work-executed area is trampled by position adjustment travel of the work vehicle in the travel-direction upstream area, it is possible to widen the travelable area to easily perform the position adjustment travel of the work vehicle in the travelable area, so that the starting condition of the first automatic travel control can be easily satisfied in the travelable area.

That is, it is possible to set a travelable area that is suitable for the work of the work vehicle, and, accordingly, the position adjustment travel by the work vehicle in the travelable area can be easily performed without causing troubles in the work of the work vehicle, and the starting condition of the first automatic travel control can be easily satisfied.

The third characteristic configuration of the present invention is an aspect that, in the automatic position adjustment travel control, the work vehicle is able to perform a plurality of times of position adjustment travel in the travelable area.

According to the present configuration, even in a case where only the entry area is selected as the travelable area and thus the travelable area is narrow, it is possible to surely satisfy the starting condition of the first automatic travel control by the position adjustment travel of the work vehicle in the travelable area.

The fourth characteristic configuration of the present invention is an aspect that, in the position adjustment travel of the work vehicle with the automatic position adjustment travel control, the automatic travel control part transitions from the automatic position adjustment travel control to the first automatic travel control in a case where the condition determination part determines that the starting condition of the first automatic travel control is satisfied.

According to the present configuration, in a case where the starting condition of the first automatic travel control is satisfied by the position adjustment travel of the work vehicle with the automatic position adjustment travel control, the work vehicle will immediately work, along with the satisfaction of the starting condition, while performing the automatic travel according to the parallel path in a state of high precision with a small fluctuation relative to the parallel path. As a result, it is possible to improve the work efficiency while improving the work precision.

The fifth characteristic configuration of the present invention is an aspect that the automatic travel control part executes automatic moving control for causing the work vehicle to perform automatic travel in a non-working state according to a movement path between a standby position of the work vehicle, which is away from the parallel paths, and a starting end position of a parallel path that is set as a first parallel path in a travel order of the work vehicle from among the plurality of parallel paths, and the entry area setting part sets a predetermined area including the starting end position as the entry area of the first parallel path in the automatic moving control.

According to the present configuration, if the work vehicle is made to start the automatic travel after being positioned at the standby position, the automatic travel control part executes the automatic moving control, so as to cause the work vehicle to perform the automatic travel in the non-working state according to the movement path from the standby position toward the entry area. Further, in a case where the starting condition of the first automatic travel control is satisfied at the point in time where the work vehicle reaches the entry area in this automatic travel, the automatic travel control part executes the first automatic travel control, so as to cause the work vehicle to perform the automatic travel in the working state according to the parallel path. In addition, in a case where the starting condition of the first automatic travel control is not satisfied, the automatic travel control part executes the automatic position adjustment travel control without executing the first automatic travel control, so as to cause the work vehicle to perform the position adjustment travel. Further, in a case where the starting condition of the first automatic travel control is satisfied by this position adjustment travel, the automatic travel control part executes the first automatic travel control, so as to cause the work vehicle to perform the automatic travel in the working state according to the parallel path.

That is, in addition to the parallel paths, even in the movement path from the standby position to the starting end position of a parallel path, the work vehicle can be made to perform the automatic travel with high precision. Accordingly, the user is no longer required to manually drive the work vehicle from the standby position to the starting end position of the parallel path, so that the burden on the user can be reduced.

The sixth characteristic configuration of the present invention is an aspect that the automatic travel control part executes a second automatic travel control for causing the work vehicle to perform automatic travel according to a connection path that connects the plurality of parallel paths in a travel order of the work vehicle, and, in the second automatic travel control, the entry area setting part sets a predetermined area including a starting end position of a parallel path connected to the connection path as the entry area.

According to the present configuration, in a case where the starting condition of the first automatic travel control is satisfied at the point in time where the work vehicle reaches the entry area in the automatic travel with the second automatic travel control, the automatic travel control part executes the first automatic travel control, so as to cause the work vehicle to perform the automatic travel in the working state according to the parallel path. In addition, in a case where the starting condition of the first automatic travel control is not satisfied, the automatic travel control part executes the automatic position adjustment travel control without executing the first automatic travel control, so as to cause the work vehicle to perform the position adjustment travel. Further, in a case where the starting condition of the first automatic travel control is satisfied by this position adjustment travel, the automatic travel control part executes the first automatic travel control, so as to cause the work vehicle to perform the automatic travel in the working state according to the parallel path.

That is, it is possible to cause the work vehicle to preferably perform the automatic travel according to the multiple parallel paths, which are connected in the travel order via the respective connection paths, in a state with high precision with a small fluctuation relative to the respective parallel paths. Accordingly, the user is no longer required to manually drive the work vehicle from the trailing end position of a parallel path to the starting end position of the next parallel path, so that the burden on the user can be reduced.

The seventh characteristic configuration of the present invention is an aspect that, in a case where the first automatic travel control is suspended, the entry area setting part sets a predetermined area including a suspension position of the first automatic travel control on the parallel paths as the entry area.

According to the present configuration, for example, in a case where the work vehicle is a harvesting work vehicle such as a combine, if the first automatic travel control is suspended when the harvest is full, then the work vehicle is moved to a predetermined discharge position to discharge the harvest, and then the work vehicle is moved to the entry area including the suspension position of the first automatic travel control to restart the automatic travel, the automatic travel control part executes the first automatic travel control in a case where the starting condition of the first automatic travel control is satisfied at this point in time, so as to cause the work vehicle to perform the automatic travel in the working state according to the parallel path from the suspension position of the first automatic travel control. In addition, in a case where the starting condition of the first automatic travel control is not satisfied, the automatic travel control part executes the automatic position adjustment travel control, so as to cause the work vehicle to perform the position adjustment travel in the entry area including the suspension position. Further, in a case where the starting condition of the first automatic travel control is satisfied by this position adjustment travel, the automatic travel control part executes the first automatic travel control, so as to cause the work vehicle to perform the automatic travel in the working state according to the parallel path.

That is, even in a case where the work vehicle is returned to the suspension position of the first automatic travel control to restart the automatic travel of the work vehicle, the automatic travel can be preferably restarted in a state with high precision with a small fluctuation relative to the parallel path.

## Claims

1. An automatic travel system for a work vehicle comprising:
a measuring part (86A, 87A) configured to measure a position and an orientation of the work vehicle;
an automatic travel control part (23F) configured to execute automatic travel control for causing the work vehicle to perform automatic travel according to a work path in a working state, based on a plurality of work paths arranged with a predetermined interval and positioning information from the positioning part (42);
a deviation detection part (23Fb) configured to detect an angular deviation or a lateral deviation of the work vehicle relative to the work path, based on the work path and the positioning information from the measuring part (86A, 87A); and
a condition detection part configured to determine whether or not a condition of the automatic travel control is satisfied, based on detection information from the deviation detection part (23Fb),
wherein the condition detection part determines that the condition of the automatic travel control is satisfied in a case where the angular deviation is less than a predetermined angle or the lateral deviation is less than a predetermined value, and,
the automatic travel control part (23F) executes the automatic travel control in a case where the condition determination part (23Fc) determines that the condition of the automatic travel control is satisfied and executes automatic position adjustment travel control for causing the work vehicle to perform position adjustment travel by an operation combining a forward-reverse traveling switching operation and a steering operation of the work vehicle so as to satisfy the condition of the automatic travel control in a case where the condition determination part (23Fc) determines that the condition of the automatic travel control is not satisfied, **characterized in that**
in the position adjustment travel of the work vehicle with the automatic position adjustment travel control, the automatic travel control part (23F) transitions from the automatic position adjustment travel control to the automatic travel control in a case where the condition determination part (23Fc) determines that the condition of the automatic travel control is satisfied.

2. The automatic travel system for the work vehicle according to claim 1, wherein,
in a case where the lateral deviation of the work vehicle relative to the work path is equal to or greater than the predetermined value when the work vehicle enters the work path from a connection path connecting the work paths, the automatic travel control part (23F) executes the automatic position adjustment travel control so as to reduce the lateral deviation of the work vehicle relative to the work path.

3. The automatic travel system for the work vehicle according to claim 1 or 2, wherein,
in a case where the angular deviation of the work vehicle relative to the work path is equal to or greater than the predetermined value when the work vehicle enters the work path from a connection path connecting the work paths, the automatic travel control part (23F) executes the automatic position adjustment travel control so as to reduce the angular deviation of the work vehicle relative to the work path.

4. An automatic travel method for a work vehicle, comprising:
measuring a position and an orientation of the work vehicle;
executing automatic travel control for causing the work vehicle to perform automatic travel according to a work path in a working state, based on a plurality of work paths arranged with a predetermined interval and positioning information of the work vehicle;
detecting an angular deviation or a lateral deviation of the work vehicle relative to the work path, based on the work path and the positioning information of the work vehicle;
determining whether a condition of the automatic travel control is satisfied, based on the detected information of angular deviation or lateral deviation;
determining that the condition of the automatic travel control is satisfied in a case where the angular deviation is less than a predetermined angle or the lateral deviation is less than a predetermined value;
executing the automatic travel control in a case where the condition for the automatic travel control is satisfied; and
executing automatic position adjustment travel control for causing the work vehicle to perform position adjustment travel by an operation combining a forward-reverse traveling switching operation and a steering operation of the work vehicle so as to satisfy the condition of the automatic travel control in a case where the condition of the automatic travel control is not satisfied; **characterized in that**
in the position adjustment travel of the work vehicle with the automatic position adjustment travel control, transitioning from the automatic position adjustment travel control to the automatic travel control in a case where the condition of the automatic travel control is satisfied.
